# EUROPÄISCHE PATENTANMELDUNG

(11) **EP 1 862 794 A1**
(43) Veröffentlichungstag der Anmeldung: **05.12.2007**
(21) Anmeldenummer: 07010433.6
(22) Anmeldetag: 25.05.2007
(51) Int. Cl.: G01N 21/64

(54) **Verfahren zum räumlich hochauflösenden Abbilden**

(30) Priorität: 31.05.2006 DE 102006026203
(71) Anmelder: Carl Zeiss MicroImaging GmbH, 07745 Jena (DE)
(72) Erfinder: Krampert, Gerhard, 07743 Jena (DE); Heinlein, Thomas, 64385 Reichelsheim (DE)
(74) Vertreter: Hampe, Holger

(57) **Zusammenfassung**

Verfahren zum räumlich hochauflösenden Abbilden einer mit einer Substanz markierten Struktur einer Probe, mit den Schritten : -Auswählen der Substanz aus einer Gruppe von Substanzen, die mit einem optischen Umschaltsignal wiederholt aus einem ersten Zustand mit ersten optischen Eigenschaften in einen zweiten Zustand mit zweiten optischen Eigenschaften überführbar sind und die aus dem zweiten Zustand in den ersten Zustand zurückkehren können, Überführen der Substanz in Bereichen der Probe mit dem Umschaltsignal in den zweiten Zustand, wobei ein definierter Bereich gezielt ausgelassen wird, und Registrieren eines optischen Messsignals, das der Substanz in dem ersten Zustand zuzuordnen ist, für einen Registrierbereich, der neben Bereichen, in denen die Substanz in den zweiten Zustand überführt ist, den gezielt ausgelassenen Bereich umfasst, wobei die Substanz aus einer Untergruppe von Substanzen ausgewählt wird, bei denen sich die beiden Zustände mindestens hinsichtlich eines der folgenden Kriterien unterscheiden :- Konformationszustand eines Moleküls, -Strukturformel eines Moleküls, räumliche Anordnung von Atomen innerhalb eines Moleküls, räumliche Anordnung von Bindungen innerhalb eines Moleküls, - Anlagerung weiterer Atome oder Moleküle an ein Molekül, - Gruppierung von Atomen und/oder Molekülen, räumliche Orientierung eines Moleküls, - Orientierung benachbarter Moleküle zueinander,- von einer Vielzahl von Molekülen und/oder Atomen ausgebildete Ordnung, wobei sich die Substanz in einem synthetisierten Nanopartikel befindet.

## Beschreibung

Die räumliche Auflösung abbildender optischer Verfahren wird grundsätzlich durch die Beugungsgrenze (Abbe'sche Grenze) bei der Wellenlänge des relevanten optischen Signals gesetzt.

Es sind aber bereits Verfahren auf dem Gebiet der Fluoreszenzmikroskopie bekannt, bei denen durch Ausnutzung von nichtlinearen Zusammenhängen zwischen der Schärfe des effektiven fokalen Spots und der eingestrahlten Intensität eines optischen Anregungssignals die Beugungsgrenze bei der Abbildung einer Struktur einer Probe effektiv unterschritten wird.

Beispiele sind die Multiphotonenabsorption in der Probe oder die Erzeugung höherer Harmonischer des optischen Anregungssignals. Auch eine Sättigung eines optisch induzierten Übergangs kann als nichtlinearen Zusammenhang ausgenutzt werden, wie beispielsweise bei einer Entvölkerung des fluoreszierenden Zustands durch stimulierte Emission (englisch : stimulated emission depletion = STED) oder einer Entvölkerung des Grundzustands (englisch : ground state depletion = GSD). Bei diesen beiden Verfahren, die prinzipiell molekulare Auflösungen erreichen können, wird ein Fluoreszenzfarbstoff, mit dem die interessierende Struktur einer Probe markiert ist, überall dort, wo ein optisches Umschaltsignal einen charakteristischen Grenzwert, der in dieser Beschreibung als Sättigungsgrenzwert bezeichnet wird, überschreitet, in einen Energiezustand versetzt, aus dem heraus keine Fluoreszenz (mehr) erfolgt. Wenn dabei der räumliche Bereich, aus dem dann noch ein Messsignal registriert wird, durch ein lokales Intensitätsminimum des optischen Umschaltsignals festgelegt wird, das eine Nullstelle aufweist und beispielsweise durch Interferenz erzeugt wird, sind seine Abmessungen und damit die erreichte Ortsauflösung kleiner als die Beugungsgrenze. Der Grund ist, dass der räumliche begrenzte Teilbereich, aus dem das Messsignal registriert wird, mit zunehmenden Sättigungsgrad der Entvölkerung des an der Fluoreszenz beteiligten Zustands eingeengt wird. Genauso wird die Kante eines fokalen Spots oder Streifens steiler, was ebenfalls zu einer erhöhten Ortsauflösung führt.

Zum Unterschreiten der von Abbe postulierten Auflösungsgrenze wird in verschiedenen, optischen Bildgebungsverfahren eine nichtlineare Wechselwirkung zwischen dem Beleuchtungslicht und den Fluorophoren der Probe eingesetzt. In der Mikroskopie mittels Stimulated Emission Depletion (STED, US 5,731,588) ist der nichtlineare Prozess dabei die Sättigung der Abregung durch stimulierte Emission. Bei der Saturated Patterned Excitation Microscopy (SPEM, EP 1,157,279) wird dagegen die allgemein bekannte Sättigung der Anregung benutzt, um eine Nichtlinearität in der Antwort des Fluorophors zu erhalten.

Die Grundidee ist es hier, zur Gewinnung einer Objektabbildung (Bild einer Objektstruktur) mindestens zwei Teilbilder eines Objekts unter jeweils verschiedenen Beleuchtungsintensitäten aufzunehmen, die am Objekt mit räumlichen Mustern ausgebildet sind, wobei jeweils für einen Objektpunkt eine nicht-lineare Abhängigkeit des vom Objektpunkt her detektierten Lichtes von den am Objektpunkt gegebenen Beleuchtungsintensitäten besteht und die Teilbilder unterschiedliche Beiträge verschiedener Raumfrequenzanteile der Objektstruktur enthalten, und aus den Teilbildern durch Rekonstruktion der Raumfrequenzanteile die gewünschte Objektabbildung zu gewinnen. Die Einstellung von Beleuchtungsintensitäten mit verschiedenen räumlichen Mustern zur Erfassung der verschiedenen Teilbilder besitzt den Vorteil, dass virtuell nieder- und höherfrequente Raumfrequenzanteile im Muster der Beleuchtungsintensitäten erzeugt werden, an die die Raumfrequenzanteile der Objektstruktur gekoppelt sind. Durch diese Kopplung werden die Raumfrequenzanteile der Objektstruktur in Bezug auf das Raumfrequenzintervall verschoben, das entsprechend der lichtoptischen Transferfunktion (OTF) für eine Bilderfassung offen ist. Aus den Teilbildern kann die vollständige Objektabbildung mit einem entsprechend erweiterten Raumfrequenzbereich rekonstruiert werden.
Beim STED-Verfahren wird eine Probe bzw. ein Fluoreszenzfarbstoff in der Probe durch ein optisches Anregungssignal zur Fluoreszenz angeregt. Der räumliche Bereich. der Anregung, für den die Beugungsgrenze gilt, wird dann verkleinert, indem er mit einem Intensitätsminimum eines Interferenzmusters eines Abregungslichtstrahls als Umschaltsignal überlagert wird. Überall dort, wo das Umschaltsignal einen Sättigungsgrenzwert übersteigt, wird der Fluoreszenzfarbstoff vollständig durch stimulierte Emission ausgeschaltet, d. h. aus dem zuvor angeregten Energiezustand wieder abgeregt. Der verbleibende räumliche Bereich, aus dem anschliessend noch Fluoreszenzlicht spontan emittiert wird, entspricht nur noch einem verkleinerten Gebiet um die Nullstelle des Intensitätsminimums, in dem das Umschaltsignal nicht oder nicht mit ausreichender Intensität vorlag. Obwohl dieses Verfahren der Fluoreszenzmikroskopie nachvollziehbar eine Ortsauflösung unterhalb der Beugungsgrenze liefert, ist es auch mit Nachteilen verbunden. Die Lebensdauer des Energiezustands des Fluoreszenzfarbstoffs, der mit dem Anregungsstrahl angeregt wird, ist nur kurz. Damit das Umschalten effektiv innerhalb einer noch kürzeren Zeitspanne komplettiert ist, muss daher eine vergleichsweise hohe Intensität des Umschaltsignals angewandt werden. Damit bei der Abregung durch das Umschaltsignal ein nichtlinearer Zusammenhang zwischen der verbleibenden Fluoreszenz und der Intensität des Umschaltsignals hergestellt wird, d. h. Sättigung erreicht wird, muss die intensität des Abregungsstrahls zusätzlich sehr hoch sein. So wird in der Regel ein gepulster Hochleistungslaser für den Abregungslichtstrahl benötigt, der die Durchführung des bekannten Verfahrens recht kostspielig macht.

Dieselben Nachteile gelten auch für bekannte GSD-Verfahren (Ground-State-Depletion , S.W. Hell and M. Kroug, Appl. Phys.B 60 (1995) 495),
da auch hier Zeitbeschränkungen und Leistungsanforderungen durch kurze Lebensdauern der beteiligten Energiezustände gesetzt werden.
Allerdings sind die Spitzenleistungsanforderungen geringer als bei STED.
EP1616216 beschreibt das Schalten mit fluoreszierenden Proteinen und deren Anwendung auf die Auflösungssteigerung in einem Fluoreszenzmikroskop.

Die nichtlineare Wechselwirkung bringt einige Probleme mit sich, die diesen und allen verwandten Methoden zur Auflösungssteigerung gemein ist. Die bisher verwendeten Farbstoffe sind im Allgemeinen nur bedingt geeignet, eine ausreichende nichtlineare Antwort hervorzurufen. So zeigen z.B. viele Farbstoffe unter den Bedingungen der hochauflösenden Verfahren verstärktes Ausbleichen (Dyba et al., Appl.Opt. 42(25), pp. 5123 - 5129, 2003). Um z.B. den Farbstoff Cy5 unter nichtlinearen Antwortbedingungen zu stabilisieren, müssen ihm Zusatzstoffe wie Triplettquencher und Sauerstofffänger zugegeben werden (Heilemann et al., J.Am.Chem.Soc. 127, pp. 3801 - 3806, 2005). Diese Zusatzstoffe schränken die Verwendbarkeit allerdings stark ein, da sie z.B. die für in-vivo Experimente notwendige physiologische Umgebung nicht kompatibel sind. Des Weiteren sind viele interessante Farbstoffe, die für die Hochauflösung wichtige Eigenschaften besitzen, nicht unter diesen physiologischen Bedingungen, z.B. mit Wasser als Lösungsmittel einsetzbar (Irie et al., Nature 420 (6917), pp. 759 - 760, 2002). Die Gründe dafür liegen unter anderem in der Tatsache, dass sie in Wasser als stark polarem Lösungsmittel entweder nur eine sehr geringe Löslichkeit zeigen oder dass sie mit zunehmender Polarität des Lösungsmittels eine geringer werdende Quantenausbeute zeigen (Liang et al., Proc.Natl.Acad.Sci.USA 100(14), pp. 8109 - 8112,2003).
Einige Methoden zur Auflösungssteigerung, wie Ground State Depletion (GSD), die sehr attraktiv wegen ihrer einfachen Implementierung und benötigten Aufbaus sind, können wegen der fehlenden Stabilität der Farbstoffe gegen die benötige Art der nichtlinearen Wechselwirkung nicht genutzt werden.
Es ist die Aufgabe der vorliegenden Erfindung, die Stabilität zu erhöhen.

### Erfindung:

Die Aufgabe der Erfindung wird durch ein Verfahren mit den Merkmalen des Patentanspruchs1 gelöst.

Vorteilhafte Ausführungsformen des neuen Verfahrens sind in den Unteransprüchen beschrieben.

Um Farbstoffe unter nichtlinearen Antwortbedingungen zu stabilisieren, wird eine Reihe von Methoden unter Einsatz von Kern - Hülle Teilchen vorgeschlagen. Diese Nanopartikel können z.B. basierend auf Siliziumoxid synthetisiert werden. Diese Synthese ist unter anderem aus US 2004/0101822 A1 bekannt. Bei dieser Synthese werden ein oder mehrere Farbstoffmoleküle im Inneren einer Siliziumdioxidhülle eingeschlossen, wodurch die Wechselwirkung dieser Chromophore mit anderen Substanzen in der Probe gezielt verändert, z.B. minimiert werden können. Auch kann die Wechselwirkung mit Substanzen, die zusätzlich bei der Synthese mit im Kerninneren der Nanopartikel eingeschlossen werden, gezielt in ihrer Stärke bzw. Konzentration variiert werden. Durch die chemisch inerte Siliziumdioxidhülle kann chemische und physikalische Wirkung der Chromophore und Zusatzstoffe auf das Innere des Nanopartikels beschränkt werden und so die Auswirkungen auf die äußere Probenumgebung minimiert werden. Aus diesem Grundprinzip ergeben sich eine Reihe von Methoden, die im Folgenden geschildert werden.

Um das Bleichverhalten von Farbstoffen unter nichtlinearen Antwortbedingungen positiv zu beeinflussen, können zusätzlich zu den Fluorophoren ein oder mehrere Substanzen aus den folgenden Klassen (e- Donor, Triplettquencher, Sauerstoffquencher, usw.) mit in das Innere der Partikel gepackt werden. Dabei stellt die Hülle der Nanopartikel sicher, dass keine nennenswerten Mengen dieser Substanzen nach außen in die Probe gelangen und die Umgebungsbedingungen verändern. Das Gleiche gilt umgekehrt für Substanzen in der Probe, die die Eigenschaften der Farbstoffe negativ beeinflussen könnten wie z.B. Wasser.
Durch die Anwesenheit dieser Substanzen in unmittelbarer Nähe zu den Farbstoffmolekülen, können mehrere Ausbleichkanäle wie Excited State Absorption mit anschließender Bildung eines nicht leuchtenden Farbstoffkations verhindert bzw. in ihrer Wirksamkeit stark eingeschränkt werden. Der besondere Vorteil bei Siliziumdioxid-Nanopartikeln liegt in der geringen Menge an benötigten Zusatzsubstanzen aufgrund deren räumlicher Nähe zu den Farbstoffmolekülen und der geringen bis verschwindenden Einwirkung dieser Zusatzsubstanzen auf die zu untersuchende Probe.
Die Zugabe etwaiger Komponenten kann zu verschiedenen Zeitpunkten erfolgen. Auch die Zusammensetzung der Dots und die Art der Bindung kann variiert werden. Wichtig ist, dass diese Komponenten im Kontakt mit den Farbstoffen stehen müssen, entweder durch kovalente Anbindung an die Farbstoffe oder an Moleküle in ihrer Nähe, d.h. im Kern oder an der Innenseite der Hülle. Alternativ wäre es denkbar, die Zusatzstoffe nichtkovalent einzubringen, so dass sie innerhalb des Kerns diffundieren können, aber durch die Hülle des Dots die Diffusion nach aussen verhindert ist.
Ein Beispiel einer Zugabe von APTS ist US 20040101822 (Example 1, (0143) beschrieben.

Im weiteren kann die Hülle der Partikel dazu benutzt werden, nachteilig wirkende Substanzen oder Umgebungseigenschaften wie z.B. Sauerstoff, Lösungsmittel, pH-Wert, usw., der zu untersuchenden Probe von dem / den Fluorophor(en) fernzuhalten und störende Wechselwirkungen zu vermindern. Dies ermöglicht für den jeweiligen Farbstoff eine Mikroumgebung zu schaffen, die optimal an die Erfordernisse des Farbstoffs angepasst ist, ohne die Makroumgebung mit physiologischen oder anderen gewünschten Eigenschaften aufgeben zu müssen. Die Hülle der Nanopartikel erlaubt insbesondere den Einsatz von Farbstoffen in Lösungsmittelumgebungen, in denen sie nicht oder nur sehr schlecht messbar waren. Insbesondere können durch diese Methode Quantenausbeuten und Ausbleichresistenz deutlich verbessert werden. Besonders großes Potential ist auf dem Gebiet der photoschaltbaren Fluorophore zu erwarten, die fast ausschließlich nicht in Wasser löslich und daher nur sehr eingeschränkt einsetzbar sind.
Über diesen erweiterten Einsatzbereich hinaus bieten derartige Nanopartikel für die Optimierung von photoschaltbaren Molekülen ein sehr viel größeres Potential. Eine Möglichkeit wäre die Herstellung eines "künstlichen Rhodopsin-Systems", d.h. die Verbesserung der Schalteigenschaften des Chromophors durch den Einschluss in eine äußere Hülle. So zeigt das Chromophor des Rhodospinproteins, das Retinal, in Lösung sehr viel schlechtere Schalteigenschaften als in seiner natürlichen Proteinumgebung, wie z.B. eine sehr viel langsamere Schaltgeschwindigkeit und geringere Quanteneffizienz des Schaltens. Durch die Wechselwirkung des Chromophors mit der äußeren Hülle kann also gezielt in die quantenmechanische Dynamik photoschaltbarer Moleküle eingegriffen werden und so deren Eigenschaften verbessert werden. Ganz allgemein gesprochen entsteht durch den Einschluss in eine äußere Hülle eine neue Möglichkeit Farbstoffeigenschaften gezielt zu verändern bzw. zu optimieren.
Zusätzlich zu diesen Verbesserungen der Farbstoffe kann auch die Verträglichkeit der Probe gegenüber bestimmten Farbstoffen erhöht werden. Farbstoffe die bislang beispielsweise wegen ihrer Giftigkeit für biologische Proben nur in fixierten Zellenproben eingesetzt werden konnten, können durch den Einschluss in eine Hülle künstlich in ihrer Giftigkeit verringert werden und so auch in lebenden Zellen eingesetzt werden. Die Auswirkungen der Einfärbung auf die Funktion des zu untersuchenden Objekts können so verringert werden.
Weiterhin kann durch eine zusätzliche Beschichtung der Partikeloberflächen mit Molekülen bevorzugt aus folgenden Klassen : chemische Modifikation (bevorzugt Alkohole, Amine, Carbonsäuren, Halogenide, Thiole und deren Derivate) Nukleotide, Peptide, Proteine (insbesondere Antikörper und Antigene), Chromophore (insbesondere Fluorophore)) eine Funktionalisierung erreicht werden.
Des Weiteren bieten Nanopartikel durch Einschluss mehrerer Farbstoffen mit überlappenden Absorptions- und Emissionsspektren die Möglichkeit, FRET-Konstrukte (Förster Resonance Energy Transfer) zu synthetisieren, die aufgrund ihrer stark nichtlinearen Antwort auf Anregungslicht besonders interessant für die hochauflösende Bildgebung sind. Dabei kann die Stärke der Wechselwirkung (z.B. über Distanz, Lösungsmittel, ....) zwischen dem Donorfarbstoff und den Akzeptorfarbstoffmolekülen gezielt variiert werden.
Die Verwendung von Substanzen, die zwei Zustände mit unterschiedlichen optischen Eigenschaften aufweisen, ist ein zentraler Aspekt der Erfindung. Dabei kann mit einem Umschaltsignal die Substanz gezielt von dem ersten in den zweiten Zustand geschaltet werden. Dieser Vorgang ist umkehrbar. D. h., die Substanz kann auch wieder zurück in den ersten Zustand gebracht werden oder selbst dorthin zurückkehren. Die optischen Eigenschaften der Substanz in dem ersten Zustand unterscheiden sich von denjenigen in dem zweiten Zustand dadurch, dass nur sie das Messsignal unterstützen. Es ist jedoch nicht zwingend, dass die relevanten optischenEigenschaften"binär"sind, d. h. in dem einen Zustand zu 100% und in dem anderen Zustand zu 0% vorliegen. Es ist vielmehr ausreichend, wenn bei den relevanten optischen Eigenschaften so grosse Unterschiede gegeben sind, dass sie eine zumindest überwiegende Zuordnung des Messsignals zu dem ersten Zustand erlauben.
Vielmehr unterscheiden sich die beiden Zustände mindestens hinsichtlich eines der folgenden Kriterien :- Konformationszustand eines Moleküls,-Struktur Formel eines Moleküls, räumliche Anordnung von Atomen innerhalb eines Moleküls, räumliche Anordnung von Bindungen innerhalb eines Moleküls, Anlagerung weiterer Atome oder Moleküle an ein Molekül, -Gruppierung von Atomen und/oder Molekülen, räumliche Orientierung eines Moleküls , Orientierung benachbarter Moleküle zueinander, von einer Vielzahl von Molekülen und /oder Atomen ausgebildete Ordnung. Zum Überführen der entsprechenden Substanzen von ihrem ersten in ihren zweiten Zustand bewirkt das optische Umschaltsignal also beispielsweise eine Umlagerungen von Atomgruppen, eine Photoisomerisierung, insbesondere eine cistranslsomerisierung, eine Photozyklisierung, eine Protonierung oder De-Protonierungen, eine Spin-Umklappung, einen Elektronentransfer und/oder Energietransfer zwischen verbundenen Molekülen oder Moleküluntereinheiten.

Ein Vorteil der Erfindung gegenüber dem Stand der Technik auf dem Gebiet der Fluoreszenzmikroskopie besteht darin, dass die Zustände der in Frage kommenden Substanzen in der Regel eine um ein Vielfaches längere Lebensdauer als die an der Fluoreszenz beteiligten Energiezustände aufweisen. Die Lebensdauer des zweiten Zustands beträgt daher in der Regel mindestens 1 ns. Bevorzugt ist eine Lebensdauer von mindestens 10 ns.
Besonders bevorzugt sind thermisch stabile Zustände.
Zahlreiche Umschaltprozesse, bei denen der Ausgangs-und/oder Endzustand relativ langlebig (> 10 ns) ist, können mit vergleichsweise niedrigen Intensitäten ausgelöst und in die Sättigung gebracht werden, weil es nur verhältnismässig langsame oder manchmal sogar keine Prozesse gibt, die mit dem Umschaltprozess konkurrieren.
Die unterschiedlichen optischen Eigenschaften der beiden Zustände der Substanz können unterschiedliche spektrale Eigenschaften sein. Beispielsweise können die ersten optischen Eigenschaften gegenüber den zweiten optischen Eigenschaften unterschiedliche Absorptionen für ein optisches Testsignal aufweisen, wobei das Messsignal in Transmission oder auch in Reflektion beobachtet werden kann. Als unterschiedliche spektrale Eigenschaften bevorzugt sind unterschiedliche Lumineszenzen aus der Fluoreszenz, Phosphoreszenz, Elektrolumineszenz und Chemolumineszenz umfassenden Gruppe.
Moleküle, die ihre spektralen Eigenschaften, insbesondere ihre Farbe verändern und die ebenfalls als Substanz zur Markierung der interessierenden Struktur im Rahmen der Erfindung geeignet sind, werden auch als photochrom bezeichnet.

Statt unterschiedlicher spektraler Eigenschaften können die beiden Zustände der Substanz auch unterschiedliche Polarisationseigenschaften, beispielsweise in Bezug auf ein optisches Testsignal oder ein von der Probe selbstemittiertes Messsignal, aufweisen.

Um bei dem neuen Verfahren die Beugungsgrenze bei der Ortsauflösung zu unterschreiten, sind die Substanz und das Umschaltsignal so aufeinander abzustimmen, dass das Überführen von dem ersten Zustand mit dem Umschaltsignal in den zweiten Zustand nichtlinear von der Intensität des Umschaltsignals abhängt. Dies wird erreicht, wenn die Überführung der Substanz in den zweiten Zustand überall dort vollständig bzw. im Wesentlichen vollständig erfolgt, wo das Umschaltsignal einen Sättigungsgrenzwert überschreitet. Konkret muss die Intensität des Umschaltsignals in dem gesamten Registrierbereich ausserhalb des gezielt ausgelassenen räumlichen Bereichs den Sättigungsgrenzwert überschreiten, und gleichzeitig muss der gezielt ausgelassene räumliche Bereich ein lokales Intensitätsminimum des Umschaltsignals sein. Ein solches lokales Intensitätsminimum mit Nullstelle der Intensität kann durch ein Interferenzmuster bereitgestellt werden. Grundsätzlich können hierzu aber auch Projektionen eingesetzt werden ; man kann das Umschaltsignal weiterhin unter einem spitzen oder stumpfen Winkel von der Seite einstrahlen. Darüber hinaus sind Hologramme zur Erzeugung lokaler Intensitätsminima des Umschaltsignals möglich. Mit den Intensitätsminima einfacher Interferenzmustern sind aber besonders leicht kleinste räumliche Bereiche definierbar, die von dem Umschaltsignal ausgelassen werden.
Bevorzugt werden bei den neuen Verfahren Substanzen eingesetzt, die mit einem anderen Schaltsignal von dem zweiten in den ersten Zustand überführbar sind. Bei dem andern Schaltsignal kann es sich wie bei dem Umschaltsignal um ein optisches Signal handeln. Es kann beispielsweise aber auch ein elektrisches oder thermisches Signal sein. Es ist weiterhin möglich, dass die Rückschaltung in den ersten Zustand spontan, d. h. bereits bei Umgebungstemperatur thermisch getrieben, erfolgt. So ist es bekannt, dass Moleküle die eine photoinduzierte cistrans-isomerisierung durchlaufen, rein thermisch in den ersten Zustand zurück kommen können. Mit dem anderen Schaltsignal kann die Substanz aber gezielt in den ersten Zustand zurück gebracht werden, was vorteilhaft sein kann, um das Verfahren insgesamt zu beschleunigen.

Das andere Schaltsignal wird bevorzugt vor dem Umschaltsignal bzw. nach dem Registrieren des Messsignals angewandt. Sofern das Umschalten mit dem Umschaltsignal durch das andere Schaltsignal nicht wesentlich beeinträchtigt wird, kann das andere Schaltsignal auch noch während des Aufbringens des Umschaltsignals auf die Probe aufgebracht werden. Es ist weiterhin nicht erforderlich, das andere Schaltsignal auf den interessierenden räumlichen Bereich einzugrenzen, was den Aufwand für das Aufbringen bei optischen Schaltsignalen reduziert und andere Arten von anderen Schaltsignalen überhaupt erst ermöglicht.

Wenn ein Testsignal auf die Probe gerichtet wird, um das zu registrierende Messsignal zu erzeugen, wird dies nach dem Umschaltsignal auf die Probe aufgebracht. Dabei kann auch das Testsignal über einen den gezielt ausgelassenen räumlichen Bereich einschliessenden grösseren Bereich auf die Probe aufgebracht werden. Die für die Erhöhung der Ortsauflösung des neuen Verfahrens erforderliche räumliche Eingrenzung wird von dem optischen Umschaltsignal geleistet.
Wenn es sich bei dem Messsignal um von der Probe emittiertes Licht handelt, kann ein entsprechendes Anregungssignal, das als Testsignal eingesetzt wird, auch gleichzeitig mit dem Umschaltsignal auf die Probe aufgebracht werden. Es sollte aber in jedem Fall später oder frühestens gleichzeitig mit dem anderen Schaltsignal auf die Probe aufgebracht werden, soweit das Anregungssignal und das andere Schaltsignal nicht sowieso identisch sind.

Um eine Probe vollständig abzubilden, ist es erforderlich, dass die Probe mit dem von dem Umschaltsignal gezielt ausgelassenen Bereich abgerastert, d. h. an allen Punkten abgetastet, wird. Dabei kann die Probe zu einem Zeitpunkt auch in mehreren voneinander beabstandeten Punkten, d. h. definierten Bereichen, gleichzeitig gemessen werden. Dabei werden mehrere optische Messsignale, die der Substanz in dem ersten Zustand zuzuordnen sind, für mehrere Registrierbereiche, die jeweils neben Bereichen, in denen die Substanz in den zweiten Zustand überführt ist, einen gezielt ausgelassenen Bereich umfassen, zwar gleichzeitig aber getrennt voneinander registriert. Die Rasterung kann jeweils durch eine räumliche Verschiebung der verwendeten Schaltsignale, insbesondere des Umschaltsignals, gegenüber den Koordinaten der Probe erfolgen. Da alle von dem Umschaltsignal gezielt ausgelassenen räumlichen Bereiche vorzugsweise Intensitätsminima eines Interferenzmusters sind, kann die Rasterung durch die Verschiebung einer oder mehrerer Interferenzminima des Umschaltsignals erfolgen. Dabei kann diese Verschiebung durch eine reine Phasenverschiebung der interferierenden Strahlen bewerkstelligt werden.

Beim Abrastern einer Probe nach dem neuen Verfahren ergibt sich eine zyklische Abfolge der Schritte : Überführen der Substanz in Bereichen der Probe mit dem Umschaltsignal in den zweiten Zustand, wobei ein definierter Bereich gezielt ausgelassen wird ; Registrieren des optischen Messsignals, das der Substanz in dem ersten Zustand zuzuordnen ist, für einen den jeweils gezielt ausgelassenen Bereich umfassenden Registrierbereich ; und Überführen der Substanz in den ersten Zustand. Dabei reicht es, wie bereits angedeutet wurde, aus, wenn nur das Umschaltsignal mit seinem Intensitätsminimum genau auf den jeweils interessierenden definierten Bereich der Probe ausgerichtet wird.

Das neue Abbildungsverfahren kann nach dem Markieren der Strukturen mit der fluoreszierenden Substanz auf einem üblichen Fluoreszenzmikroskop durchgeführt werden, wobei der zusätzliche Aufwand für die Auflösungsverbesserung unter die Beugungsgrenze vergleichsweise gering ist und sich auf zusätzliche Mittel zum Bereitstellen des optischen Umschaltsignals beschränken kann. Diese Mittel könne beispielsweise einen einfachen Laser oder auch eine konventionelle Lampe umfassen. In einer bevorzugten Ausführung, bei der zur Beschleunigung des Verfahrens in mehreren Bereichen gleichzeitig gemessen wird, werden die Messsignale aus den einzelnen Bereichen gleichzeitig mit einer(CCD-) Kameraausgelesen. Das Gesamtbild der Probe ergibt sich dann aus der Zusammenfügung mehrerer Bilder mit unterschiedlichen Positionen der vermessenen Bereiche in der Probe.

Fig.1 zeigt ein erfindungsgemäss eingesetztes Nanopartikel, bestehend aus einem Siliziumoxidkern mit eingelagerten Fluorophoren, beispielsweise Cy5, einer Siliziumoxidhülle und einer funktionalen Beschichtung, beispielweise mit Antikörpern.

Fig. 2 zeigt das Schaltverhalten (Bild von PSF-Engineering) mit Nanopartikeln, die z.B. Cy5 als Photoschalter enthalten ..

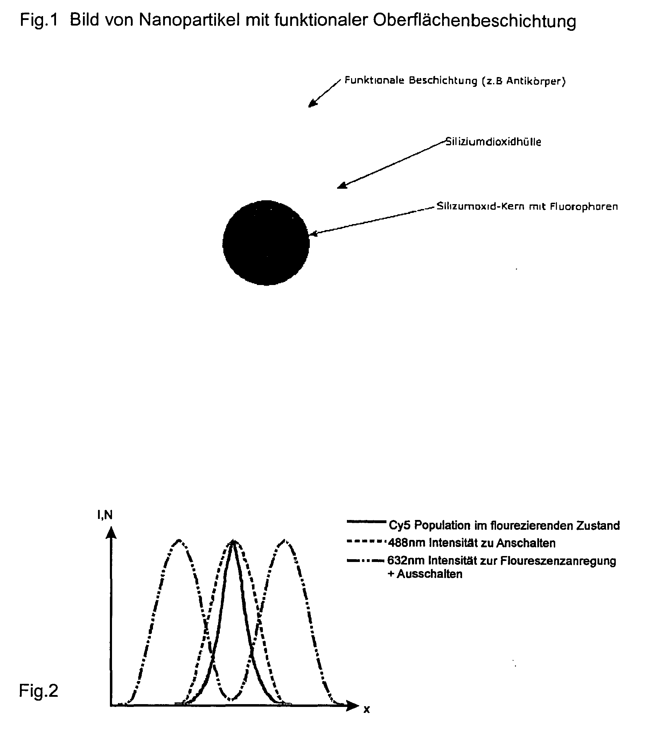

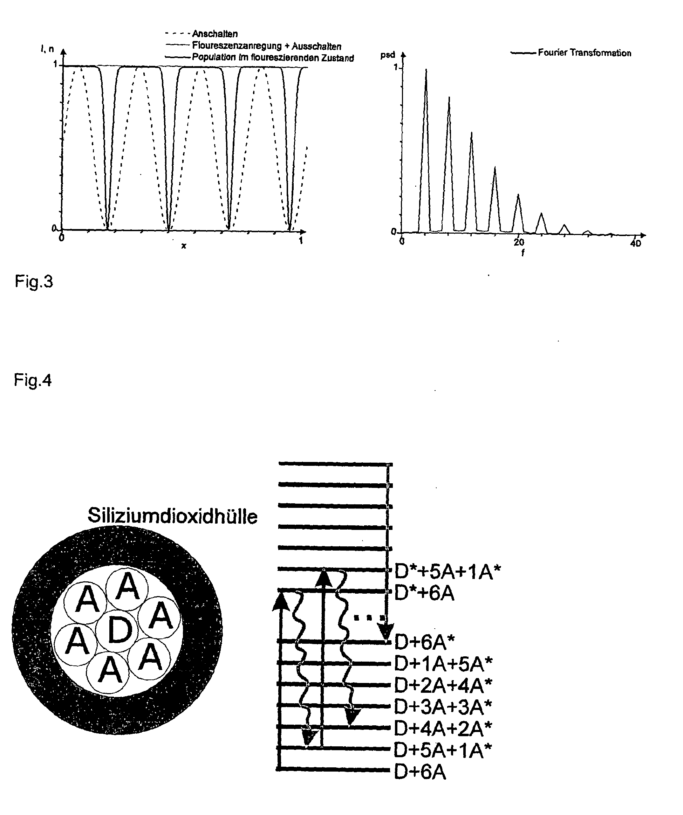

Fig. 2 zeigt die beugungsbegrenzten Intensitätsverteilungen zum Anschalten (z.B. 488 nm für Cy5) bzw. zur Fluoreszenzanregung und gleichzeitigen Ausschalten (z.B. 632 nm). Durch den nichtlinearen Zusammenhang zwischen den Intensitäten und dem Schaltzustand der Nanopartikel kann so eine Verteilung von fluoreszierenden Nanopartikeln erreicht werden, die deutlich kleiner als die Beugungsbegrenzung sind. Der nichtlineare Zusammenhang für die Berechung von Fig. 2 wird dabei aus den Schaltraten (An und Aus) durch Lösen der Ratengleichungen ermittelt.Fig. 3 zeigt das Bild der Anregungsverteilung bei Strukturierter Beleuchtung und der dabei entstehenden Harmonischen der Beleuchtung durch die nichtlineare Antwort des Farbstoffes.

Fig. 3 zeigt die unstrukturierte Intensitätsverteilung zur Fluoreszenzanregung und Ausschalten der Nanopartikel und die Sinusartig-modulierte Intensitätsverteilung zum Anschalten der Nanopartikel. Durch den nichtlinearen Zusammenhang zwischen den Intensitäten und dem Schaltzustand der Nanopartikel wird nicht nur die Raumfrequenz der Sinusmodulation, sondern auch Harmonische davon in die Probe übertragen (zu sehen in der Fourier-Transformation der räumlichen Verteilung der fluoreszierenden Nanopartikel). Durch Aufnahme von mehreren Bildern mit räumlich verschobenen Sinusmustern kann durch einen Auswertealgorithmus im Fourierraum ein einzelnes hochaufgelöstes Bild aus diesen Einzelbildern errechnet werden. Der nichtlineare Zusammenhang wurde wie bei Fig. 2 berechnet.

Fig.4 zeigt das Energieschema eines Nanopartikel FRET-Konstrukts mit einem Donorfarbstoff und sechs Akzeptorfarbstoffmolekülen in einem Nanopartikel.

D und D* sind respektive der Grund- und erste angeregte Zustand des Donormoleküls. Analog dazu sind der Grund- und erste angeregte Zustand eines Akzeptormoleküls mit A und A* bezeichnet. Die Zahl vor A oder A* gibt dabei die Anzahl der Akzeptormoleküle an, die sich im jeweiligen Zustand A oder A* befinden. Die geraden Pfeile stehen dabei für einen Übergang mit Beteiligung eines Photons, d.h. Absorption oder Emission eines Photons. Während die Pfeile mit gewellter Linie für den strahlungslosen Energietransfer vom Donor- zu einem Akzeptormolekül stehen. Nur falls alle Akzeptormoleküle bereits angeregt sind, bei Anregung des Donormoleküls kommt es zur Aussendung von Fluoreszenzlicht (gelber Pfeil).

## Patentansprüche

1. Verfahren zum räumlich hochauflösenden Abbilden einer mit einer Substanz markierten Struktur einer Probe, mit den Schritten : -Auswählen der Substanz aus einer Gruppe von Substanzen, die mit einem optischen Umschaltsignal wiederholt aus einem ersten Zustand mit ersten optischen Eigenschaften in einen zweiten Zustand mit zweiten optischen Eigenschaften überführbar sind und die aus dem zweiten Zustand in den ersten Zustand zurückkehren können, Überführen der Substanz in Bereichen der Probe mit dem Umschaltsignal in den zweiten Zustand, wobei ein definierter Bereich gezielt ausgelassen wird, und Registrieren eines optischen Messsignals, das der Substanz in dem ersten Zustand zuzuordnen ist, für einen Registrierbereich, der neben Bereichen, in denen die Substanz in den zweiten Zustand überführt ist, den gezielt ausgelassenen Bereich umfasst, wobei die Substanz aus einer Untergruppe von Substanzen ausgewählt wird, bei denen sich die beiden Zustände (1,2) mindestens hinsichtlich eines der folgenden Kriterien unterscheiden :- Konformationszustand eines Moleküls, -Strukturformel eines Moleküls, räumliche Anordnung von Atomen innerhalb eines Moleküls, räumliche Anordnung von Bindungen innerhalb eines Moleküls, - Anlagerung weiterer Atome oder Moleküle an ein Molekül, - Gruppierung von Atomen und/oder Molekülen, räumliche Orientierung eines Moleküls, - Orientierung benachbarter Moleküle zueinander,- von einer Vielzahl von Molekülen und/oder Atomen ausgebildete Ordnung, **dadurch gekennzeichnet, dass** sich die Substanz in einem synthetisierten Nanopartikel befindet.

2. Verfahren nach Anspruch 1, wobei das Nanopartikel eine Hülle aufweist , die zur Anlagerung an andere Substanzen geeignet ist.

3. Verfahren nach Anspruch 2, wobei die Hülle mit Molekülen beschichtet ist.

4. Verfahren nach einem der obengenannten Ansprüche, wobei die Hülle hydrophob oder hydrophil ist.

5. Verfahren nach einem der obengenannten Ansprüche, wobei die Hülle optisch transparent ist.

6. Verfahren nach einem der obengenannten Ansprüche, wobei die Hülle aus Silizium besteht.

7. dass das Nanopartikel eine siliziumhaltige Verbindung ist.

8. Verfahren nach einem der obengenannten Ansprüche, wobei es sich bei den Substanzen um chemisch erzeugte, organisch chemische oder anorganisch chemische Farbstoffe handelt.

9. Verfahren nach einem der obengenannten Ansprüche, wobei zur Beeinflussung des Farbstoffverhaltens Zusatzstoffe in das Nanoopartikel eingebracht werden.

10. Verfahren nach einem der obengenannten Ansprüche, wobei Zusatzstoffe wie Elektronendonore, Triplettquencher, Sazuerstoffquencher oder andere Chromophor stabilisierende Substanzen in das Nanopartikel eingebracht werden.

11. Verfahren nach einem der obengenannten Ansprüche, **dadurch gekennzeichnet, dass** die Lebensdauer des zweiten Zustands (2) länger als 1 ns ist.

12. Verfahren nach einem der obengenannten Ansprüche, **dadurch gekennzeichnet, dass** die unterschiedlichen optischen Eigenschaften der beiden Zustände (1,2) der Substanz unterschiedliche spektrale Eigenschaften sind.

13. Verfahren nach einem der obengenannten Ansprüche, **dadurch gekennzeichnet, dass** die ersten optischen Eigenschaften gegenüber den zweiten optischen Eigenschaften unterschiedliche Absorptionen für ein Testsignal aufweisen.

14. Verfahren nach einem der obengenannten Ansprüche, **dadurch gekennzeichnet, dass** die ersten optischen Eigenschaften gegenüber den zweiten optischen Eigenschaften unterschiedliche Lumineszenzen aus der Fluoreszenz, Phosphoreszenz, Elektrolumineszenz und Chemolumineszenz umfassenden Gruppe aufweisen. 6. Verfahren nach einem der Ansprüche 1 und 2, **dadurch gekennzeichnet, dass** die unterschiedlichen optischen Eigenschaften der Zustände der Substanz unterschiedliche Polarisationseigenschaften sind.

15. Verfahren nach einem der obengenannten Ansprüche, **dadurch gekennzeichnet, dass** die Substanz und das Umschaltsignal (3) so aufeinander abgestimmt werden, dass sich überall dort, wo die Intensität des Umschaltsignals (3) einen Sättigungsgrenzwert überschreitet, vollständig der zweite Zustand (2) der Substanz einstellt.

16. Verfahren nach Anspruch 15, **dadurch gekennzeichnet, dass** die Intensität des Umschaltsignals (3) in dem gesamten Registrierbereich ausserhalb des gezielt ausgelassenen Bereichs (9) den Sättigungsgrenzwert überschreitet und dass der gezielt ausgelassene räumliche Bereich (9) ein lokales Intensitätsminimum des Umschaltsignals (3) ist.

17. Verfahren nach Anspruch 16, **dadurch gekennzeichnet, dass** das lokale Intensitätsminimum des Umschaltsignals (3) eine Intensitätsminimum mit Nullstelle eines Interferenzmusters (15) ist.

18. Verfahren nach einem der obengenannten Ansprüche, **dadurch gekennzeichnet, dass** die Substanz aus der Gruppe von Substanzen ausgewählt wird, die mit einem anderen Schaltsignal von dem zweiten Zustand (2) in den ersten Zustand (1) überführbar sind.

19. Verfahren nach Anspruch 18, **dadurch gekennzeichnet, dass** das andere Schaltsignal vor oder gleichzeitig mit dem Umschaltsignal (3) auf die Probe(7) aufgebracht wird.

20. Verfahren nach Anspruch 18 oder 19, **dadurch gekennzeichnet, dass** das andere Sohaltsignal über einen den Registrierbereich einschliessendes grösseren Bereich auf die Probe(7) aufgebracht wird.

21. Verfahren nach einem der obengenannten Ansprüche, **dadurch gekennzeichnet, dass** nach dem Umschaltsignal (3) ein Testsignal auf die Probe (7) aufgebracht wird.

22. Verfahren nach Anspruch 21, **dadurch gekennzeichnet, dass** das Testsignal über einen den gezielt ausgelassenen Bereich (9) einschliessendes grösseren Bereich auf die Probe (7) aufgebracht wird.

23. Verfahren nach einem der obengenannten Ansprüche, **dadurch gekennzeichnet, dass** die Lumineszenz durch das andere Schaltsignal angeregt wird, wobei das andere Schaltsignal während des Aufbringens des Umschaltsignals (3) auf die Probe (7) aufgebracht wird.

24. Verfahren nach einem der obengenannten Ansprüche, **dadurch gekennzeichnet, dass** die Probe (7) mit dem gezielt ausgelassenen Bereich (9)abgerastert wird.

25. Verfahren nach einem der obengenannten Ansprüche, **dadurch gekennzeichnet, dass** gleichzeitig mehrere optische Messsignale, die der Substanz in dem ersten Zustand (1) zuzuordnen sind, für mehrere Registrierbereiche, die jeweils neben Bereichen, in denen die Substanz in den zweiten Zustand überführt ist, einen gezielt. ausgelassenen Bereich (9) umfassen, getrennt voneinander registriert werden.

26. Verfahren nach einem der obengenannten Ansprüche, **dadurch gekennzeichnet, dass** in zyklischer Abfolge die Schritte Überführen der Substanz in Bereichen der Probe (7) mit dem Umschaltsignal (3) in den zweiten Zustand (2), wobei ein definierter Bereich (9) gezielt ausgelassen wird,
Registrieren des optischen Messsignals (5), das der Substanz in dem ersten Zustand zuzuordnen ist, für einen den jeweils gezielt ausgelassenen definierten Bereich(9) umfassenden Registrierbereich, Überführen der Substanz in den ersten Zustand, für verschiedene definierte Bereiche der Probe (7) nacheinander ausgeführt werden.

27. Verwendung eines Fluoreszenzmikroskops bei der Durchführung des Verfahrens nach einem der Ansprüche 1 bis 20.
